Europäisches Patentamt

European Patent Office

Office européen des brevets

(19)

(11) Veröffentlichungsnummer: **0 102 640**
A2

(12) # EUROPÄISCHE PATENTANMELDUNG

(21) Anmeldenummer: 83108732.5

(22) Anmeldetag: 05.09.83

(51) Int. Cl.³: **G 01 S 7/06**
G 01 S 13/50

(30) Priorität: 08.09.82 DE 3233327

(43) Veröffentlichungstag der Anmeldung:
14.03.84  Patentblatt 84/11

(84) Benannte Vertragsstaaten:      –
FR GB IT NL

(71) Anmelder: SIEMENS AKTIENGESELLSCHAFT
Berlin und München Wittelsbacherplatz 2
D-8000 München 2(DE)

(72) Erfinder: Siegel, Harald, Ing. grad.
Johann-Werner-Strasse 4
D-8035 Gauting(DE)

(54) **Schaltungsanordnung zur Entdeckung und Erkennung von Hubschraubern.**

(57) Zur Entdeckung und Erkennung von schwebenden Hubschraubern werden Puls-Doppler-Radargeräte, die in einem
höheren Frequenzbereich, z.B. X-Band, arbeiten, verwendet.
Der unterhalb der unteren Grenzfrequenz des Doppelfilters
zur Festzeichenunterdrückung liegende Frequenzbereich
wird mittels einer Kette von Geschwindigkeitsfiltern auf
Spektrallinien von Zielechos untersucht, die einen vorgegebenen Schwellenwert überschreiten. Die Signalteile aller
Einzelfilter der Filterkette, die unterhalb des Schwellwertes
bleiben, werden mit einem Ausgangssignal des Dopplerfilters aufsummiert und einer Schwellenwertschaltung zur
Zielentscheidung zugeführt.

FIG 3

EP 0 102 640 A2

SIEMENS AKTIENGESELLSCHAFT     Unser Zeichen
Berlin und München             VPA 82 P 1 7 5 9 E

Schaltungsanordnung zur Entdeckung und Erkennung von
Hubschraubern

Die Erfindung bezieht sich auf eine Schaltungsanordnung
zur Entdeckung und Erkennung von schwebenden Hubschraubern unter Verwendung eines in höheren Frequenzbereichen, z.B. X-Band, arbeitenden Radargerätes mit Einrichtungen zur Festzeichenunterdrückung.

Die frühzeitige Entdeckung und Erkennung von Hubschraubern mittels Radargeräten ist in verschiedenen Situationen, z.B. bei militärischem Einsatz, von wachsender Bedeutung. Für geschulte Radarbeobachter ist es in gewissen Grenzen möglich, anhand der von einem Radargerät erhaltenen Dopplerfrequenzen verschiedene Zielklassen durch akustische Dopplerauswertung zu unterscheiden. Schwebende Hubschrauber, die keine auswertbare Dopplerfrequenz mehr liefern, sind somit von
Festzielen nicht mehr zu unterscheiden. Bei sehr geringer Geschwindigkeit liefern sie eine so niedrige Dopplerfrequenz, die mit der von langsam fahrenden Fahrzeugen vergleichbar ist und aufgrund einer höher liegenden
Grenzfrequenz der Festzeichenunterdrückungsfilter
(Dopplerfilter) auch noch zusammen mit Festzeichen
im Radarempfänger unterdrückt werden.

Es ist bereits bekannt, diese Schwierigkeiten durch ein
Verfahren zur passiven Detektion und Identifizierung
eines Hubschraubers aufgrund einer charakteristischen
Abstrahlung von Energie im sichtbaren und/oder Wärme-

Ha 1 Mai / 03.09.82          6 Ausfertigungen
                             1. Ausfertigung

strahlungsbereich zu umgehen (DE-AS 2 655 520). Zur Detektion werden hier ein die Eigenschaft des Hubschraubers als wärmeabstrahlendes Punktziel ausnutzender Detektionssensor und zur Identifizierung ein die durch den Hubschrauberrotor modulierte sichtbare Strahlung des Hintergrundes bzw. die modulierte Rotoreigenstrahlung im Wärmestrahlungsbereich ausnutzender Identifizierungssensor verwendet.

Der Erfindung liegt die Aufgabe zugrunde, mit einer Schaltungsanordnung der eingangs genannten Art eine sichere und einfache Methode zur Entdeckung und Erkennung von Hubschraubern unter Zuhilfenahme bereits vorhandener Einrichtungen zur Signalauswertung anzugeben. Gemäß der Erfindung wird diese Aufgabe dadurch gelöst, daß der unterhalb der unteren Grenzfrequenz des Dopplerfilters liegende Frequenzbereich in einer eigenen in Teilbereiche unterteilten Filterschaltung auf Liniensignale (Spektrallinien) von Zielechos, die einen vorgegebenen Schwellenwert überschreiten, untersucht wird und daß die Signalanteile aller Teilbereiche des Filters, die zu keiner Schwellenüberschreitung (Zielentscheidung) geführt haben, nach Summenbildung mit einem Ausgangssignal des Dopplerfilters einer zweiten Zielentscheidung (Schwellenschaltung) unterzogen werden.

Dieser Lösung liegt die Erkenntnis zugrunde, daß dem Liniensignal des Hubschraubers ein Rauschspektrum überlagert ist, das von beweglichen Teilen einschließlich Rotor des Hubschraubers herrührt. Bei der Auswertung des unteren Dopplerfrequenzbereiches muß daher eine Entscheidung zwischen Spektrallinien mit und ohne Rauschspektrum durchgeführt werden, um Fehlentscheidungen, die durch andere langsam bewegte Ziele, z.B.
Autos, möglich sind, zu unterbinden. Die Schaltungsanordnung gemäß der Erfindung ermöglicht es, in einer
Zeit, die der Zielüberstreichzeit entspricht, eine
Entscheidung zu fällen, ob die Zielechos ein Linien-
oder ein Linien- und Rausch-Spektrum besitzen.

Gemäß einer vorteilhaften Weiterbildung der Erfindung
ist die Schaltungsanordnung daher so ausgebildet, daß
der Frequenzbereich unterhalb der unteren Grenzfrequenz
des Dopplerfilters mit einer möglichst großen Anzahl
von Geschwindigkeitsfiltern mit großer Flankensteilheit
erfaßt wird und daß jedem Filter eine Schwellenschaltung und ein Schalter zwischen dem Filterausgang und
einer allen Filtern gemeinsamen Summierschaltung zugeordnet ist. Die Geschwindigkeitsfilter sind dabei
in einem zum Dopplerfilter und zu einer nachfolgenden
Nachintegrationsschaltung im Signalauswertungszweig
des Radarempfängers parallelen Schaltungszweig angeordnet.

Die Erfindung und weitere Einzelheiten der Erfindung
werden anhand der Figuren 1 bis 6 näher erläutert.

Es zeigen
    Fig. 1 das Doppler-Frequenzspektrum eines Hubschraubers und eines Autos,
    Fig. 2 das Doppler-Frequenzspektrum eines Hubschraubers und eines Autos in einer Filterbank,
    Fig. 3 ein Prinzipschaltbild für die Auswertung der
        Dopplerfrequenzen im unteren Frequenzbereich
        zur Hubschrauber-Erkennung,
    Fig. 4 die Filter-Kennlinien der Geschwindigkeitsfilter,

Fig. 5 die Lage eines Hubschrauberspektrums in einer
        Filterbank bestehend aus zehn Geschwindigkeits-
        Einzelfiltern,

Fig. 6 das Blockschaltbild eines Radar-Signalverarbeitungszweiges mit einer Schaltung zur Hubschrauber-Erkennung.

Die Radarechos eines schwebenden oder in langsamer Bewegung befindlichen Hubschraubers werden im Signalverarbeitungszweig eines Radargerätes mit Festzeichenunterdrückung aufgrund der niedrigen Doppler-Grenzfrequenz des Festzeichenfilters unterdrückt und gelangen
nicht zur Anzeige. Durch Herabsetzung der unteren
Grenzfrequenz kann zwar die Auswertung von Hubschrauber-Echos erreicht werden. Als Folge davon gelangen
dann auch Festzeichenechos und Echosignale von langsamen Fahrzeugen, z.B. Autos, zur Anzeige, die durch
Anwendung besonderer Maßnahmen von den Echosignalen
der Hubschrauber unterschieden werden müssen. Ein
Vergleich der Doppler-Frequenzspektren eines Hubschraubers und eines langsamen Motorfahrzeuges zeigen
unterschiedliche große Spektralanteile im gesamten
Frequenzbereich. Das Spektrum des Echosignals eines
fahrenden Autos entspricht dem eines Festzeichen-Echos
mit dem Unterschied, daß das Zentrum um die Dopplerfrequenz von 0 Hz abweicht. Ein Hubschrauber unterscheidet sich dagegen von einem fahrenden Auto durch
Spektralanteile der bewegten Teile (Rotor). Die Entdeckung eines Hubschraubers, der sich in einem Geschwindigkeitsbereich bewegt, in dem auch Kraftfahrzeuge zu erwarten sind, ist daher von der Detektion
der beweglichen Teile eines Hubschraubers abhängig.
Die Unterscheidung der Echosignal-Spektren der mit
einem Radargerät erfaßten Objekte erfolgt unter Verwendung von Geschwindigkeitsfiltern im Signalverarbeitungszweig des Radarempfängers.

Die Geschwindigkeitsfilter sind möglichst schmalbandig mit steilen Flanken ausgeführt und in einer Filterbank angeordnet. Zusätzlich wird Nebenzipfelfreiheit der Filter verlangt, die durch eine Wichtung der Eingangssignale erzielt wird.

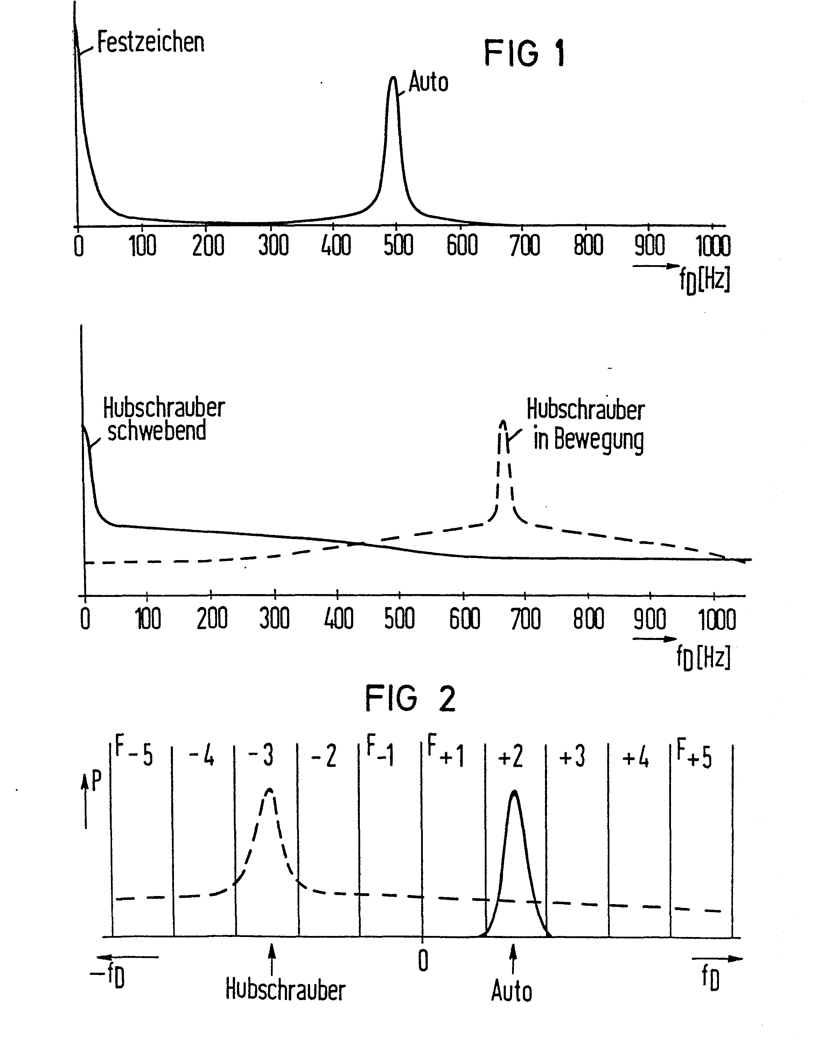

In Fig. 2 sind die Echosignale eines Hubschraubers und eines Fahrzeuges in einer aus zehn Geschwindigkeitsfiltern $F_{-5}$ bis $F_{+5}$ bestehenden Filterbank dargestellt. Die Ausgangssignale der Geschwindigkeitsfilter werden über je eine Schwelle auf das Vorliegen eines Linienspektrums (Vielecho) untersucht und gegebenenfalls über einen Schalter von der weiteren Signalauswertung ausgenommen.

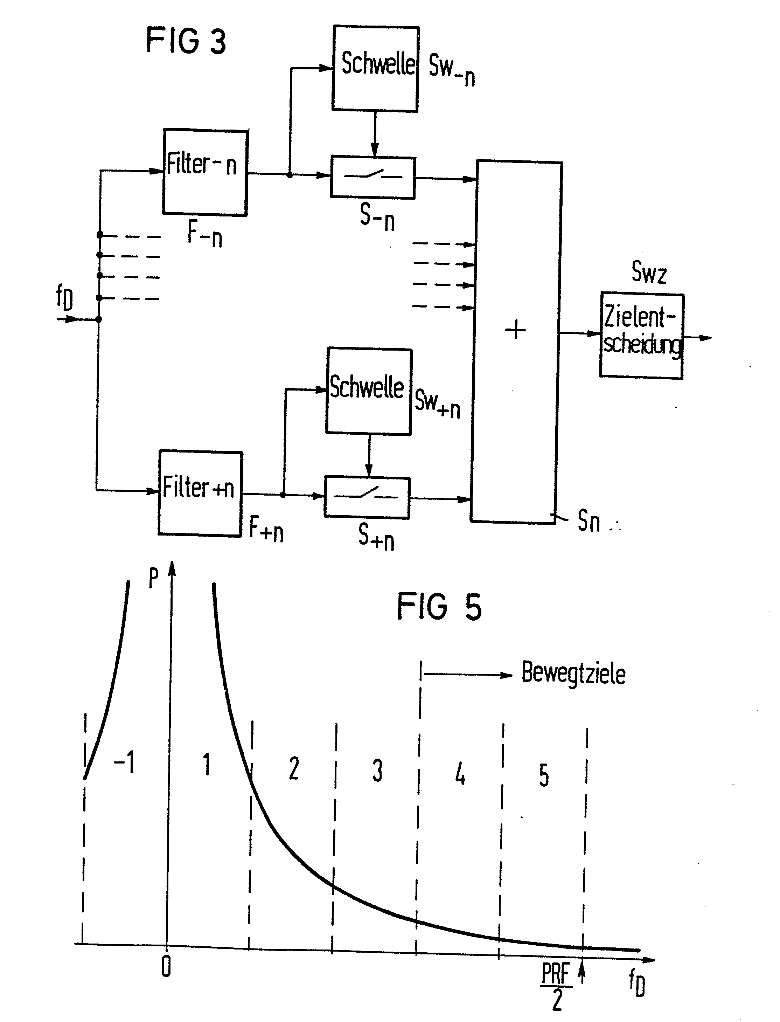

Die Fig. 3 zeigt ein Prinzipschaltbild dieser Auswertung. Die Dopplerfrequenz $f_D$ werden einer möglichst großen Anzahl schmalbandiger Geschwindigkeitsfilter $F_{-n}$ bis $F_{+n}$ zugeführt. Die Ausgangssignale, die aus dem Linien- oder Rauschspektrum eines Hubschraubers oder aus dem Linienspektrum eines Fahrzeuges, dem ein Rauschspektrum überlagert sein kann, bestehen, werden an Schalter $S_{-n}$ bis $S_{+n}$ geführt, die über eine Schwellenentscheidung der Schwellen $SW_{-n}$ bis $SW_{+n}$ gesteuert sind. Alle Signalwerte, die einen vorgegebenen Schwellenwert überschreiten (Zielechos) werden durch Öffnen des zugehörigen Schalters von der weiteren Verarbeitung ausgeschlossen, während die übrigen Signale (Rauschanteile) in einer Summierschaltung Su integriert werden. Unter Zugrundelegung der Filterbank nach Fig. 2 führen der Hubschrauber und das Auto zu einer Zielentscheidung in den Filtern $F_{-3}$ und $F_{+2}$. Die zugehörigen Schalter $S_{-3}$ und $S_{+2}$ sind daher geöffnet. Das Ausgangssignal der Summierschaltung Su wird einer weiteren Schwelle Swz zur endgültigen Zielentscheidung zugeführt, die ausschließlich aufgrund des Rauschspektrums zur Entdeckung des Hubschraubers führt.

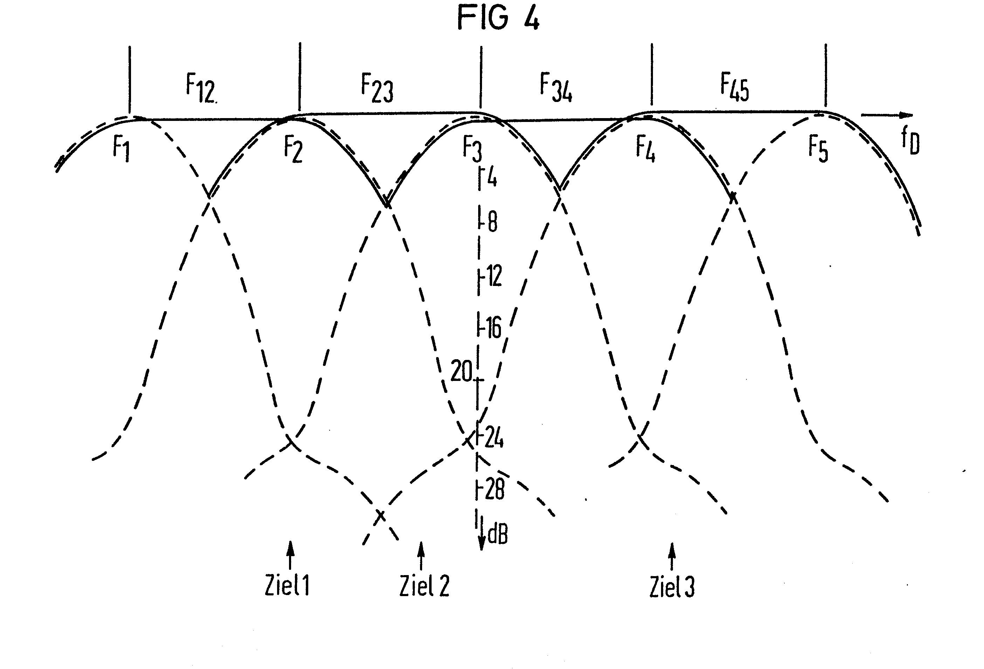

Die Anordnung der Durchlaßbereiche der Einzelfilter $F_{+1}$ bis $F_{+5}$ ist in Fig. 4 gezeigt. Die Schnittpunkte der Einzelfilter $F_1$ bis $F_5$ liegen z.B. bei 6 dB Dämpfung. Das im Gesamtfilter kleinste entdeckbare Ziel wird in den Einzelfiltern nicht entdeckt, wenn es in der Nähe dieser Schnittpunkte liegt. Deshalb müssen die Einzelfilter überlappend paarweise zusammengefaßt werden. Die Amplitude eines oder mehrerer Ziele, mit der die Filter an der Amplitude des Gesamtfilters beteiligt sind, läßt sich nicht mehr direkt feststellen. In der nachfolgend beschriebenen Weise werden die Einzelfilter ermittelt, die die Amplitude repräsentieren.

Bei Vorliegen eines einzigen Zieles 1:
Die Filter $F_{12}$ und $F_{23}$ liefern eine Zielentscheidung. Zuerst wird der Ausgang des Doppelfilters $F_{12}$ mit den Ausgängen der Einzelfilter $F_1$ und $F_2$ verglichen. In diesem Fall sind die Ausgangssignale der Doppelfilter und Einzelfilter $F_2$ gleich. D.h., daß an dem Ausgangssignal des Doppelfilters $F_{12}$ nur das Filter $F_2$ beteiligt ist, also das Filter $F_1$ kein Signal enthält. Die gleiche Operation wird für das Doppelfilter $F_{23}$ durchgeführt. Auch hier wird das Filter $F_2$ als Lieferant ermittelt. An der Bildung des Gesamtfilters ist demnach das Filter $F_2$ ausgeschlossen.

Bei Vorliegen der Ziele 1 und 2:

Der erste Test der Vergleich des Doppelfilters $F_{12}$ mit den Filtern $F_1$ und $F_2$ entspricht dem ersten Beispiel. Das Filter $F_2$ wird als belegtes Filter ermittelt. Der Vergleich des Doppelfilters $F_{23}$ mit den Filtern $F_2$ und $F_3$ wird jetzt eine Beteiligung der Filter $F_2$ und $F_3$ ergeben. Das Doppelfilter $F_{34}$ hat ebenfalls angesprochen. Der Vergleich des Doppelfilters $F_{34}$ mit den Filtern $F_3$ und $F_4$ gibt Gleichheit des Doppelfilters $F_{34}$ und des Filters $F_3$ und schließt eine Beteiligung des Filters $F_4$ aus. Als Ergebnis ergibt sich eine Nichtbeteiligung der Filter $F_2$ und $F_3$ am Gesamtfilter.

Bei Vorliegen der Ziele 1, 2 und 3 zeigt sich, daß eine Beteiligung der Einzelfilter $F_2$ bis $F_5$ an der Bildung des Gesamtfilters zu verneinen ist.

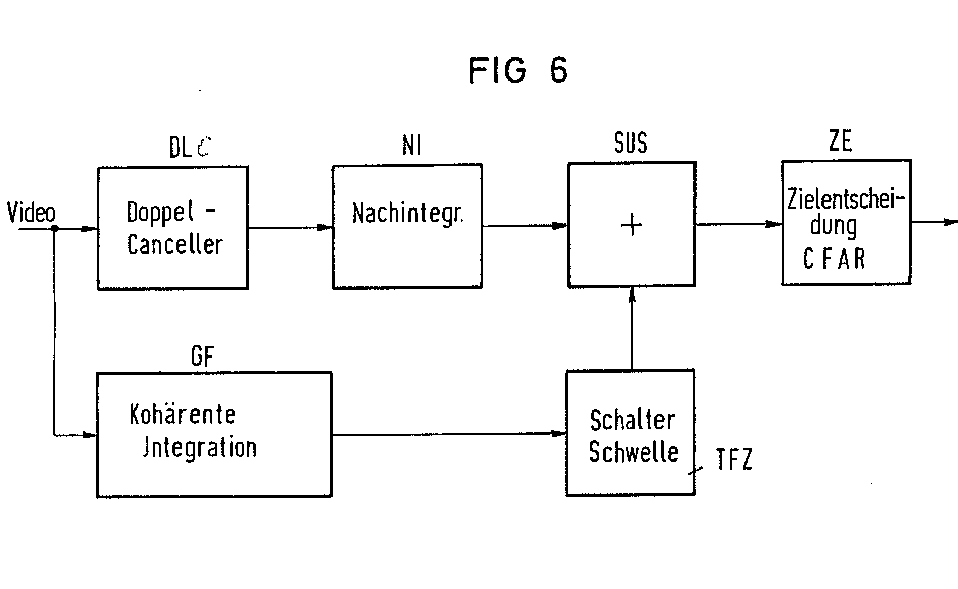

Die sichere Entdeckung von Hubschraubern erfordert die Einhaltung der Bedingung, daß die Filter $F_{-n}$ bis $F_{+n}$ eine bestimmte durch das Hubschrauberspektrum bedingte Bandbreite nicht überschreiten. Die Fig. 5 zeigt die Lage eines Hubschrauberspektrums in einer aus zehn Geschwindigkeits-Einzelfiltern bestehenden Filterbank. Wie die Figur zeigt, ist der Bereich oberhalb der Filter $F_3$ bzw. $F_{-3}$ der Bereich der Bewegtziele. Die Ausgangssignale der Filter $F_4$, $F_5$ und $F_{-5}$, $F_{-4}$ werden daher in jedem Falle einer endgültigen Zielentscheidung zugeführt werden. Die Ausblendung der Echosignale des Hubschraubers und eines Fahrzeuges erfolgt nur in den Filtern $F_1$ bis $F_3$ und $F_{-1}$ bis $F_{-3}$.

Die beschriebenen Maßnahmen zur Entdeckung von Hubschraubern kann ohne Zusätze bei Radargeräten mit statistischer Pulsfolgefrequenz angewendet werden, bei denen die halbe mittlere Pulsfolgefrequenz oberhalb der Dopplerfrequenz liegt, die die Grenze zwischen Straßenverkehr und Bewegtzielen (Flugzeugen) angibt.

Bei statistischer Pulsfolgefrequenz ist eine kohärente Integration im Dopplerbereich der zehn Geschwindigkeitsfilter $F_{-5}$ bis $F_{+5}$ möglich (Fig. 5).

Langsame Ziele, wie Festzeichen, Autos und nahezu tangential fliegende Flugzeuge führen in den Einzelfiltern zu Zielentscheidungen. Die betreffenden Filter werden bei der Bildung des Gesamtfilters ausgeschlossen und dadurch eine endgültige Zielentscheidung verhindert. Hubschrauber werden nur an dem zusätzlichen Rauschspektrum als Ziel erkannt.

Das Prinzip einer Schaltung zur Entdeckung von Hubschraubern, das auch bei X-Band-Radar erfolgreich angewendet werden kann, ist in Fig. 6 dargestellt. Die der Signalausworteschaltung eines Radarempfängers zugeführten Videosignale $f_D$ gelangen an einen Hauptsignalweg mit dem Doppel-Canceller DC mit einer Nachintegrationsschaltung NI. Der Doppel-Canceller übernimmt die Funktion der Geschwindigkeitsfilter $F_{\pm4}$ und $F_{\pm5}$ (Fig. 2) und umfaßt den gesamten Entfernungsbereich von z.B. 1024 Entfernungstoren. Die Echosignale im zugehörigen Dopplerfrequenzbereich werden daher immer einer Zielentscheidung zugeführt. Ein zweiter Signalweg mit z.B. acht Geschwindigkeitsfilter GF mit z.B. 256 Entfernungstoren wird für bestimmte Entfernungsbereiche parallel geschaltet. Zur Hubschrauber-Entdeckung sind diese Geschwindigkeitsfilter zu einem Entfernungsbereich von z.B. 0 bis 6 km geschaltet. An die Geschwindigkeitsfilter schließt sich die bereits anhand der Fig. 3 beschriebene Teilfilterzielentscheidung TFZ an, welche die Schwellenschaltungen und die gesteuerten Schalter enthält. Die beiden Signalwege werden dem zum Zwecke einer weiteren Zielentscheidung, die sich über das Gesamtfilter erstreckt, einer Summierschaltung SUS zugeführt, an die sich die zweite Zielentscheidung ZE anschließt. Dadurch wird zur Entdeckung von Hubschraubern die größtmögliche Empfindlichkeit erzielt.

Die Entdeckung der schnellen Bewegtziele erfolgt nur über den Doppel-Canceller.

Zur Entdeckung von schwebenden Hubschraubern, deren bewegter Rückstrahlquerschnitt sehr klein ist, ist eine Abschaltung der Nahechodämpfung in festzeichenfreien Gebieten sehr vorteilhaft. Noch günstiger wird sich eine Anpassung der Nahechodämpfung an die Größe der Festzeichen auswirken. Durch eine dem $R^4$-Gesetz angepaßte Nahechodämpfung bleibt die Entdeckung von Bewegtzielen über gleich großen Festzeichen auch im Nahbereich erhalten.

6 Patentansprüche
6 Figuren

Patentansprüche

1. Schaltungsanordnung zur Entdeckung und Erkennung von schwebenden Hubschraubern unter Verwendung eines in höheren Frequenzbereichen, z.B. X-Band, arbeitenden Radargerätes mit Einrichtungen zur Festzeichenunterdrückung (Dopplerfilter), d a d u r c h g e - k e n n z e i c h n e t , daß der unterhalb der unteren Grenzfrequenz des Dopplerfilters liegende Frequenzbereich in einer eigenen in Teilbereiche unterteilten Filterschaltung auf Liniensignale (Spektrallinien) von Zielechos, die einen vorgegebenen Schwellenwert überschreiten, untersucht wird und daß die Signalanteile aller Teilbereiche des Filters, die zu keiner Schwellenüberschreitung (Zielentscheidung) geführt haben, nach Summenbildung mit einem Ausgangssignal des Dopplerfilters einer zweiten Zielentscheidung (Schwellenschaltung) unterzogen werden.

2. Schaltungsanordnung nach Anspruch 1, d a d u r c h g e k e n n z e i c h n e t , daß der Frequenzbereich unterhalb der unteren Grenzfrequenz des Dopplerfilters mit einer möglichst großen Anzahl von Geschwindigkeitsfiltern mit großer Flankensteilheit erfaßt wird und daß jedem Filter eine Schwellenschaltung und ein Schalter zwischen dem Filterausgang und einer allen Filtern gemeinsamen Summierschaltung zugeordnet ist.

3. Schaltungsanordnung nach Anspruch 1 oder 2, d a - d u r c h g e k e n n z e i c h n e t , daß die Geschwindigkeitsfilter in einem zum Dopplerfilter und der nachfolgenden Nachintegrationsschaltung im Signalverarbeitungszweig des Radargerätes parallelen Schaltungszweig angeordnet sind.

4. Schaltungsanordnung nach einem der vorhergehenden Ansprüche, d a d u r c h   g e k e n n z e i c h - n e t , daß das Dopplerfilter im Signalverarbeitungsweg des Radargerätes als Doppel-Canceller ausgebildet ist und daß seine Ausgangssignale immer für eine Zielentscheidung herangezogen werden.

5. Schaltungsanordnung nach einem der vorhergehenden Ansprüche, d a d u r c h   g e k e n n z e i c h - n e t , daß die Einzelfilter für den unteren Dopplerfrequenzbereich überlappend paarweise zusammengefaßt sind.

6. Schaltungsanordnung nach einem der vorhergehenden Ansprüche, d a d u r c h   g e k e n n z e i c h - n e t , daß durch Wichtung der Eingangssignale neben- zipfelfreie Geschwindigkeitsfilter im unteren Doppler- frequenzbereich erhalten werden.

1/4

FIG 1

FIG 2

FIG 3

Schwelle Sw$_{-n}$

Filter-n

F-n

S-n

Zielentscheidung

Swz

+

Sn

$f_D$

Schwelle Sw$_{+n}$

Filter+n

F+n

S+n

FIG 5

P

Bewegtziele

-1   1   2   3   4   5

0   $\frac{PRF}{2}$   $f_D$

FIG 4

0102640

# FIG 6

DLC — Doppel-Canceller
NI — Nachintegr.
SUS — +
ZE — Zielentscheidung CFAR
GF — Kohärente Jntegration
Schalter Schwelle — TFZ
Video

4/4

0102640